# EUROPEAN PATENT APPLICATION

(11) **EP 0 986 242 A2**
(43) Date of publication of application: **15.03.2000**
(21) Application number: 99830570.0
(22) Date of filing: 10.09.1999
(51) Int. Cl.: H04N 1/00

(54) **Apparatus for the reproduction of an image on a paper or sheet of photo-sensitive material**

(30) Priority: 11.09.1998 IT BO980526
(71) Applicant: POLIELETTRONICA S.p.A., 45030 Occhiobello Frazione S.M. Maddalena (Rovigo) (IT)
(72) Inventor: Poli, Bruno, 45030 Occhiobello (Rovigo) (IT)
(74) Representative: Lanzoni, Luciano

(57) **Abstract**

Apparatus (10) for the reproduction of an image on a paper or sheet (12) of photo-sensitive material, comprising means for transporting the paper and means (31) for sending a sensitising light radiation on said paper able to impress said paper (12) to reproduce said image, said means for transporting the photo-sensitive paper comprising at least a belt closed in a loop (32) to support said photo-sensitive paper (12) and means for actuating said belt to advance said photo-sensitive paper (12). The ribbon (32) supporting said photo-sensitive paper (12) extending according to an arched path (34) around said means (31) for sending said impressing light radiation on said paper (12).

## Description

The present invention relates to an apparatus for the reproduction of an image, for instance a colour photographic image, on a paper or a sheet of photo-sensitive material.

Hereafter the term "photo-sensitive paper" shall mean a sheet or surface of any material capable of being impressed by means of an electromagnetic, in particular luminous, radiation for the obtainment of an image.

Machines of the aforesaid kind for printing a colour image on photo-sensitive paper are already known, wherein said image is impressed on said paper by means of a polychrome laser light beam. In said known machines, the photographic image is stored and processed in digital form by a computer and the polychrome laser beam, which is transported by the apparatus for generating laser beams, through optical fibres, is deviated on the photo-sensitive paper, by means of a reflecting mirror which, rotating, on command from said computer, generates the transverse lines of said photographic image, and which is borne by a motor-driven slide which is made to advance, on command from said computer, in a direction perpendicular to the plane of rotation described by said rotating mirror to realise the longitudinal lines of said photographic image.

Currently, the photo-sensitive paper whereon the photographic image is impressed is supplied in the form of a continuous belt, wound in a coil, which is cut preventively, to obtain a photo-sensitive paper of the desired format, and said photo-sensitive paper is advanced in correspondence with the area of said laser beam, where it is held by means of aspiration on the outer surface of a holed continuous conveyor belt held internally in a vacuum. Currently, the holed belt extends and moves along a linear path above the area of emission or reflection of said laser beam and, to obtain a sharp image over the entire transverse extension of the photography, a corrective lens is used interposed between the laser mirror and the photographic paper which should focus the incident radiation on each portion of the paper and in particular in correspondence with the edges thereof to obtain thereon a sharp, focused image on every point of the photograph.

A strongly felt problem in the aforementioned known devices pertains to the fact that such optical focusing means are extremely costly and difficult to command and additionally do not allow, due to the intrinsic limitations inherent to the use of an optical means to focus the incident beam, to obtain totally satisfactory results.

With the use of the paper transport device constituted by a linear belt, although it is possible to impress paper sheets of the required dimensions previously cut - whereby it is no longer necessary to discard part of the coil-fed strip of paper whereon the photographic image is not reproduced - it is nonetheless not possible to obtain a sharp and clear image in each point of the photographic reproduction, and particularly when large format photographs are to be reproduced, for which the distance of the edge portions from the centre of emission of the impressing light beams is large.

The present invention provides an apparatus for the reproduction of an image on a paper or a sheet of photo-sensitive material according to claim 1. In particular it relates to an apparatus for the reproduction of an image on a paper or sheet of photo-sensitive material, comprising means for transporting the paper and means for sending a sensitising light radiation onto said paper able to impress said paper to reproduce said image, said means for transporting the photo-sensitive paper comprise at least a belt closed in a loop to support said photo-sensitive paper and means for the actuation of said belt to advance said photo-sensitive paper, characterised in that said belt for supporting said photo-sensitive paper extends according to an arched path around said means for sending said impressing light radiation onto said paper.

The provision of a belt for supporting the paper allows to print, with no scrap, paper formats of any size whatsoever and, at the same time, allows to obtain optimal photographic reproductions in every portion of the image, avoiding the need to use complex and costly optical systems for focusing the light beam incident on said paper.

The secondary claims refer to preferred and advantageous embodiments of the invention.

Further features and advantages of the invention shall be made more readily apparent in the content of the detailed description that follows, made with reference to the accompanying drawings, which represent an embodiment provided purely by way of non limiting example, wherein:
- Figure 1 shows a lateral elevation view of a preferred embodiment of the apparatus of the present invention;
- Figure 2 shows, in partial view, a vertical section of said suction chamber of the belt for supporting the photo-sensitive paper.

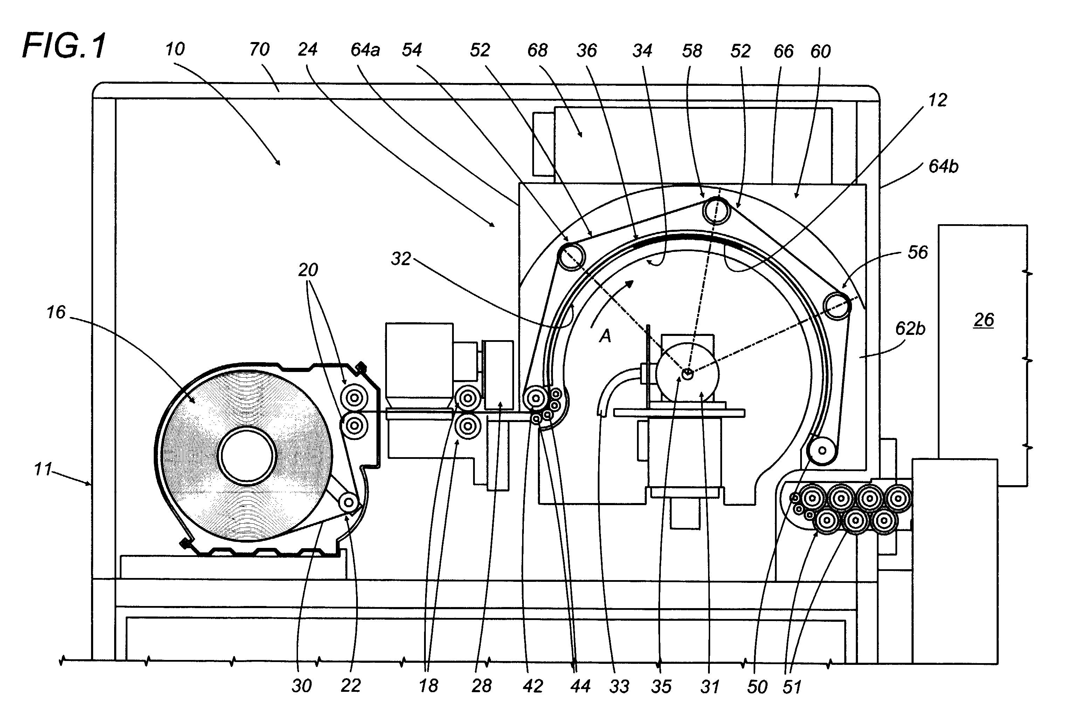

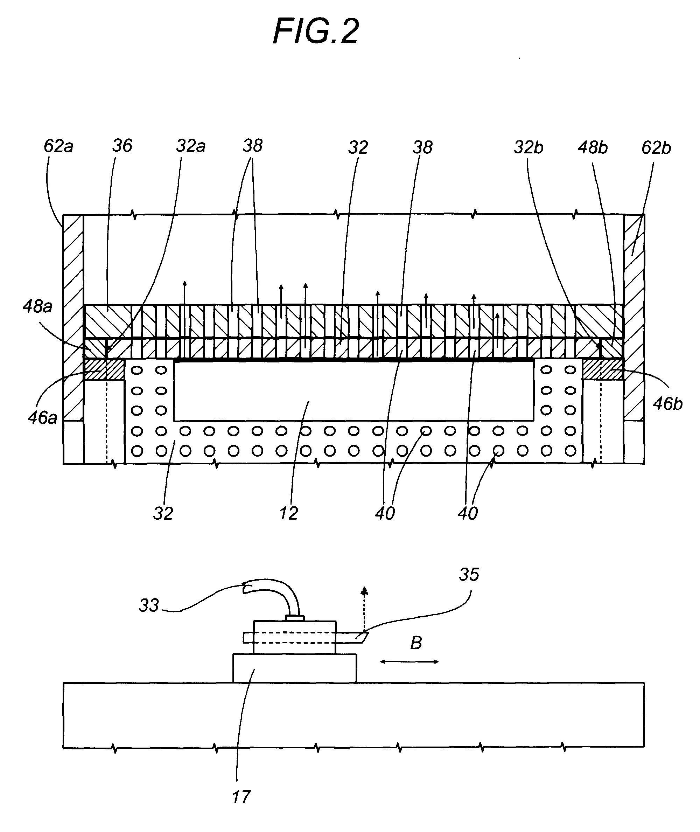

Figures 1 and 2 show a first preferred embodiment of an apparatus 10 for the reproduction of an image on a paper or sheet 12 of photo-sensitive material, which is fed in the form of a continuous band starting from a paper coil 16, borne by the supporting frame 11 of the machine, by suitable driving means constituted by a pair of mutually opposite rollers 18, 18, passing through suitable roller transmission means 20, 20 aligned horizontally with said driving rollers 18, 18 and through a tensioning roller 22 in a position underlying said transmission rollers.

The machine 10 of the present preferred embodiment further comprises, essentially, a section 24 for reproducing or printing on photo-sensitive paper and downstream thereof a section 26 for developing the image, only a part whereof is shown in Figure 1, which section is in any case of a type essentially known to the person versed in the art.

Upstream of said reproducing or printing section 24 a section 28 is provided, also of an essentially known kind, which cuts the paper band 30, unwound from the coil 16, into paper sheets or strips 12 of the required format whereon, in the subsequent reproducing section 24, the photographic image is impressed.

The reproducing section 24 essentially comprises means for supporting and transporting the paper and means 31 for sending a sensitising light radiation on said paper, which impresses said paper to obtain said image.

The light radiation for impressing the paper is obtained from an appropriate source for emitting a laser radiation (not shown in the figures), which, by way of example, to impress a colour image on appropriate photo-sensitive paper can provide a beam of polychrome laser light resulting from the combination of three monochrome laser beams having a wavelength respectively in the green, red and blue spectra.

The laser optical radiation is transmitted from the laser emitting device, through an optical fibre 33, to said means 31 for sending the light radiation (shown schematically in Figure 2), which are in the form of rotating means 35 that deviate the laser radiation radially towards the overlying photo-sensitive paper and that generate the longitudinal lines of the image printed on the paper. Said sending means 31 further comprise a translating support sled 37 movable in a direction transverse to the direction B of advance of the paper which allows to generate the transverse lines of the image.

To command the rotation and horizontal translation of the means 31 for sending the laser radiation towards the sheet of paper to be impressed, motor means are provided, not shown in the figures, which are controlled by appropriate computer means (not shown) wherein the photographic image, obtained for instance by means of an appropriate photographic camera or in any other suitable way, is stored in digital form and can be appropriately processed and modified. Said computer means also control or modulate the intensity of the individual monochrome laser beams, which are then combined in the sole beam incident on the film or photo-sensitive paper, in order to obtain a resulting polychrome laser beam that allows to obtain image points of the required colour.

According to the present embodiment of the invention, the means for transporting the photo-sensitive paper comprise continuous belt means 32 to support said cut photo-sensitive paper 12, in 28, and means for actuating the advance of said belt means for transporting said photo-sensitive paper.

As Figure 1 particularly shows, in the present preferred embodiment, said ribbon 32 supporting said photo-sensitive paper 12 extends according to an arched path 34 around said means 31 for sending said light radiation for impressing said paper 12. In particular said arched path 34 of said belt means 32 for supporting the paper 12 substantially extends on a circumference having at the centre said means 31 for transmitting said light radiation.

The means able to make said belt move along an arched path comprise an arched circumferential support guide 36 and means for retaining, with the possibility of advancing by sliding, said supporting belt 34 on said arched guide 36.

Said means for retaining with sliding advance said supporting belt 32 on said arched guide 36 are means that draw a suction on said support belt 32 on said arched guide surfaces 36. Said suction means comprise on said arched guide surface 36 a plurality of suction holes 38.

Further provided are means for retaining said paper 12 on said supporting belt 32, said retaining means comprise a plurality of holes 40 on said belt 32 which remain in communication, during the sliding of the belt 32, with the suction holes 38 in said arched guide surface 36.

The means for advancing the belt 32 for supporting the paper comprise means 42 for driving said belt 32 positioned upstream of said arched segment 34 for impressing the photography.

The means 42 for driving said belt 32 are, according to the present embodiment, situated inside said closed loop belt 32 and engage, with friction, the inner face of the belt 32 for driving said belt itself.

In the present preferred embodiment the driving means comprise at least a driving roller 42 engaging on said belt 32 and means for contrasting said driving roller 42 acting, in correspondence with the engagement point of said driving roller 42 on the belt 32, on the face of the belt 32 opposite to the engaging face of said driving roller 42.

The contrast means are positioned according to a curved segment around said driving roller 42 in such a way as to position said belt 32, exiting said driving roller 42, on the guiding means 36 immediately downstream of said driving roller 42.

Said contrasting means comprise a plurality of idle rollers 44 aligned along said curved segment around said driving roller 42, which are thrust elastically against the outer face of said belt 32.

Also provided are means for holding, when air suction is interrupted, said belt 32 in correspondence with said arched guiding surface 36.

Said means for holding said belt 32 in correspondence with said arched guiding surface 36 comprise in correspondence with the opposite lateral edges 32a, 32b of the belt 32, superposition projections 46a, 46b in a direction radial to the lateral edge areas of said belt 32, which are constituted by respective arched circumferential strips.

Further provided are lateral guides 48a, 48b for said belt 32 able to engage corresponding lateral edges 32a, 32b of said belt 32. Said means 46a, 46b for holding said belt 32 in correspondence with said arched guiding surface 36 extend transversely from said lateral guides 48a, 48b.

A primary transmission roller 50 for said belt 32 is provided at the outlet of said arched segment 34 situated, like said driving roller 42, inside said belt 32.

In the return path 52 of said belt closed in a loop 32 for supporting the paper, between said roller 50 exiting the arched segment and said driving roller 42, means are provided for guiding the return segment of the belt able to make said return segment 52 of the belt follow a path that remains radially in the vicinity of said arched impression segment 34.

The means for guiding the return segment 52 of the belt are in the form of a plurality of transmission organs 54, 56, 58 of said belt 32 mutually distanced in such a way as to make said return segment of the belt 32 follow a broken-line path.

Said transmission organs are constituted, in the present preferred embodiment, by a first and a second extreme rollers 54, 56 for engagement to the inner face of said belt 32, situated substantially aligned vertically to said roller 50 exiting the arched segment and said driving roller, and by a central transmission roller 58, also engaging the inner face of the belt 32 and situated in a position overlying said extreme transmission rollers 54, 56 in the vicinity of the centre of said arched segment 34.

In the present apparatus, a chamber 60 is provided which is held in a vacuum by air suction which maintains said paper 12 on said support belt 32 and which further retains said belt 32 on said curved sliding guide 36. Said vacuum chamber 60 presents an arched wall defined by said arched surface 36 guiding the belt 32 for supporting the photo-sensitive paper, lateral walls 62a, 62b extending radially beyond said holed arched guiding wall 36 and extreme transverse walls 64a, 64b, as well as a top wall 66 in correspondence with which a horizontal suction duct 68 is provided.

Said guiding means 54, 56, 58 of the return segment 52 of the belt are situated inside said vacuum chamber.

Said apparatus presents means 70 for covering the area wherein the photo-sensitive paper 12 is impressed which close the area itself in a substantially hermetic manner. According to a further feature of the present apparatus, means are provided for re-injecting the air, which is drawn from said vacuum chamber through said arched guiding surface 36 and said belt 32, inside said means 70 for covering the impression are.

As shown, said means 31 for sending the light radiation onto said photo-sensitive paper are positioned coaxially at the centre of said arched segment travelled by the belt 32 supporting the photo-sensitive paper that develops above the sending means 31 themselves. The means 31 for sending the light radiation are such as to send said light radiation for a certain circumferential and transverse portion of said belt 32 in correspondence with which said paper 12 is positioned.

As shown in Figure 1, said means 28 for cutting said paper are situated upstream of said driving roller for the belt 32 supporting the paper.

The operation of the present apparatus is briefly as follows. A continuous band or belt of photo-sensitive paper is fed from the coil 16 and cut by the desired length in correspondence with the cutting means 28. The individual cut sheet is then taken by said conveyor belt 32, which is actuated to advance by the roller 42 in the direction shown by the arrow A in Figure 1, and passed between the rollers 44 which make said sheet 12 follow an upwardly arched segment which positions it on the belt 32 downstream of said driving roller 42 in a position wherein said curved guiding plate 32 is present with the related suction holes and said photo-sensitive paper 12 can be retained on said belt 32. The control means command the advance of said belt 32 until said paper is in a predetermined position, in particular aligned vertically with said means 31 for sending the laser beam. Once the advance has stopped, the means for emitting the laser beam are activated, which laser beam is sent, exploiting the motion of the sending means 31, to every point of the photo-sensitive sheet 12, which, being situated on an arched segment, can be impressed correctly in every point of the photographic frame. Once the impression phase is complete, the paper 12 bearing the impressed photographic image is sent to the successive section 26 of the apparatus, being ceded by the ribbon 32, in correspondence with the transmission roller 50, to a series of transfer rollers 51 towards section 26.

The invention thus conceived may be subject to numerous modifications and variations, without thereby departing from the scope of the inventive concept. Moreover, all components can be replaced with technically equivalent elements.

## Claims

1. Apparatus (10) for the reproduction of an image on a paper or sheet (12) of photo-sensitive material, comprising means for transporting the paper and means (31) for sending a sensitising light radiation on said paper able to impress said paper (12) to reproduce said image, said means for transporting the photo-sensitive paper comprise at least a belt closed in a loop (32) for supporting said photo-sensitive paper (12) and means for activating said belt to advance said photo-sensitive paper (12), characterised in that said belt (32) for supporting said photo-sensitive paper (12) extends along an arched path (34) around said means (31) for sending said impressing light radiation on said paper (12).

2. Apparatus according to claim 1, characterised in that said arched path (34) of said belt means (32) supporting the photo-sensitive paper (12) extends substantially on a circumference having at its centre said means (31) for sending the light radiation.

3. Apparatus according to any of the previous claims, characterised in that it comprises means for making said continuous belt means (32) move along said arched path (34).

4. Apparatus according to claim 3, characterised in that said means for making said belt move along an arched path comprise an arched circumferential guide (36) and means for retaining with sliding advance said supporting belt (32) on said arched guide (36).

5. Apparatus according to claim 4, characterised in that said means for retaining with sliding advance said support belt (32) on said arched guide (36) are means for drawing by suction said support belt (32) on said arched guiding surface (36).

6. Apparatus according to claim 5, characterised in that said suction means to retain with sliding advance said support belt (32) on said arched guide (36) comprise, on said arched guide surface (36), a plurality of suction holes (38) for drawing suction said belt (32) in contact with said guiding surface (36).

7. Apparatus according to claim 6, characterised in that means are provided to retain said paper (12) on said support ribbon (32), said retaining means comprise a plurality of holes (40) on said belt (32) in communication with the suction holes (32) in said arched guide surface (36).

8. Apparatus according to any of the previous claims, characterised in that said means for advancing the belt (32) supporting the paper (12) comprise means (42) for driving said belt (32) positioned upstream of said arched segment (34) where the photograph is impressed.

9. Apparatus according to claim 8, characterised in that said means (42) for driving said belt (32) are situated inside said closed loop belt (32) engaging for the driving against the inner face of the belt (32).

10. Apparatus according to either of the previous claims 8 or 9, characterised in that said driving means comprise at least a driving roller (42) engaging on said ribbon (32) and means for contrasting said driving roller (42) acting, in correspondence with the point whereat said driving roller (42) engages on the belt (32), on the face of the belt (32) that is opposite to the engagement face of said driving roller (42).

11. Apparatus according to claim 10, characterised in that contrast means are positioned according to a curved segment around said driving roller (42) in such a way as to position said belt (32) at the exit of said driving roller (42) on the guiding means (36) downstream of said driving roller (42).

12. Apparatus according to claim 11, characterised in that contrast means comprise a plurality of idle rollers (44) aligned along said curved segment around said driving roller (42) and thrust elastically against the outer face of said belt (32).

13. Apparatus according to any of the previous claims, characterised in that means are provided for holding said belt (32) in correspondence with said arched guiding surface (36) when said suction is interrupted.

14. Apparatus according to claim 13, characterised in that said means for holding said belt (32) in correspondence with said arched guiding surface (36) comprise radial superposition projections (46a, 46b) to the lateral edge areas of said belt (32) situated respectively in correspondence with the opposite lateral edges (32a, 32b) of the belt (32).

15. Apparatus according to claim 14, characterised in that each of said radial superposition projections (46a, 46b) is constituted by a continuous radial superposition arched circumferential strip (46a, 46b) superposed in the radial direction.

16. Apparatus according to any of the previous claims, characterised in that lateral guides (48a, 48b) are provided for said belt (32) able to engage corresponding lateral edges (32a, 32b) of said ribbon (32).

17. Apparatus according to claim 16, characterised in that said means to hold said belt (32) in correspondence with said arched guiding surface (36) extend transversely from said lateral guides (48a, 48b).

18. Apparatus according to any of the previous claims, characterised in that said arched segment for the conveyance of the photo-sensitive paper (12) extends between said driving roller (42) and an opposed primary (50) transmission (32) roller at the exit from said arched segment (34), said primary transmission roller (50) being located inside said transport belt (32).

19. Apparatus according to claim 18, characterised in that in the return path (52) of said belt closed in a loop (32) supporting the photo-sensitive paper to be impressed (12), between said roller (50) at the exit from the arched segment and said driving roller (42), means for guiding the return segment of the belt are provided, able to make said return segment (52) of the belt travel along a path that remains radially in the vicinity of said arched impression segment (34).

20. Apparatus according to claim 19, characterised in that said means for guiding the return segment (52) of the belt are in the form of a plurality of transmission organs (54, 56, 58) of said belt (32) mutually distanced in such a way as to make said return segment of the belt (32) follow a broken-line path.

21. Apparatus according to claim 20, characterised in that said transmission organs of the return section of the belt are in the form of a first and a second extreme rollers (54, 56) for engagement with the inner face of said belt (32) situated above said roller at the exit of the arched segment and said driving roller, and a central transmission roller (56) for engagement with the inner face of the belt (32) positioned substantially in correspondence with the centre of said arched path (34).

22. Apparatus according to any of the previous claims, characterised in that a chamber (60) is provided, held in a vacuum by suction of the paper (12) on said support belt (32), said vacuum chamber (60) presenting an arched wall defined by said arched surface (36) for guiding the belt (32) for supporting the photo-sensitive paper.

23. Apparatus according to claim 22, characterised in that said means (54, 56, 58) for guiding the return segment (52) of the belt are situated inside said vacuum chamber.

24. Apparatus according to any of the previous claims, characterised in that said apparatus presents means (70) for covering the area whereat the photo-sensitive paper (12) is impressed, and in that means are provided for re-injecting the air, which is drawn from said vacuum chamber through said arched guiding surface (36) and said belt (32), into said means (70) for covering the impression area.

25. Apparatus according to any of the previous claims, characterised in that said means (31) for sending the light radiation on said photo-sensitive paper are positioned coaxially at the centre of said arched segment travelled by the ribbon (32) supporting the photo-sensitive paper, said means (31) for sending the light radiation being such as to send said light radiation for a certain circumferential and transverse portion of said belt (32) in correspondence with which said paper (12) is positioned.

26. Apparatus according to claim 25, characterised in that said means for sending the light transmission are in the form of rotating means (31) movable transversely with respect to the direction of advance of the belt (32).

27. Apparatus according to any of the previous claims from 25 to 26, characterised in that said means (31) for sending the radiation comprise means (33) for deviating the light radiation produced by laser emission means.

28. Apparatus according to any of the previous claims, characterised in that means (16) are provided for feeding said paper and means (28) are provided for cutting said paper to the required width.

29. Apparatus according to any of the previous claims, characterised in that computer means are provided for storing and processing the photographic image in the form of digital data and for controlling the reproduction of said image on said paper.
